# EUROPÄISCHE PATENTSCHRIFT

(11) **EP 1 798 443 B1**
(45) Veröffentlichungstag und Bekanntmachung des Hinweises auf die Patenterteilung: **14.09.2011**
(21) Anmeldenummer: 06024707.9
(22) Anmeldetag: 29.11.2006
(51) Int. Cl.: F16H 1/16, B60N 2/44

(54) **Getriebe und Fahrzeugsitz mit einem solchen Getriebe**
Transmission and vehicle seat with such a transmission
Dispositif de transmission, et siege d'un vehicule, avec ce dispositif de transmission

(30) Priorität: 16.12.2005 DE 102005060799
(43) Veröffentlichungstag der Anmeldung: 20.06.2007
(73) Patentinhaber: IMS Gear GmbH, 78166 Donaueschingen (DE)
(72) Erfinder: Knöpfle, Urban, 79822 Titisee-Neustadt (DE); Hofschulte, Wolfram, 79848 Bonndorf (DE)
(74) Vertreter: Göhring, Robert

(56) Entgegenhaltungen:
- EP-A- 0 979 750
- EP-A- 0 992 711
- WO-A-99/51456
- WO-A-02/070299
- DE-A1- 1 755 740
- DE-A1- 2 903 782
- DE-A1- 2 925 032
- DE-A1- 3 640 197
- DE-A1- 3 725 158
- DE-A1- 3 726 801
- DE-C1- 4 101 470
- FR-A- 2 711 100
- US-A- 4 802 374
- US-A- 4 962 963
- US-A- 5 197 780

## Beschreibung

EP 0 979 750 A2, welche als nächstliegender Stand der Technik betrachtet wird, beschreibt einen Fahrzeugsitz mit einer Verstellvorrichtung, die eine Spindel und eine zugeordnete Spindelmutter aufweist. Die Spindel ist drehfest an einem ersten Verstellelement der Verstellvorrichtung fixiert. Die Spindelmutter ist drehbar in einem zweiten Verstellelement gelagert, wobei das zweite Verstellelement mit dem ersten Verstellelement in Art einer Schienenführung gelagert ist. Die Spindelmutter bildet mit ihrem Außenmantel ein Schneckenrad aus, welches mit einer Schnecke eines Drehantriebs verbunden ist. Die Anordnung dient dazu, einen auf dem zweiten Verstellelement befestigten Fahrzeugsitz gegenüber dem ersten Verstellelement, welches mit einem Fahrzeugboden fest verbunden ist, zu verschieben. Nachteilhafterweise besteht die Anordnung aus einer Vielzahl von Einzelteilen, welche direkt in der durch die beiden verstellelemente gebildeten Schienenanordnung anzuordnen und zu befestigen sind. Eine ggf. erforderlich werdende Reparatur macht daher einen großen Aufwand erforderlich.

US 4,802,374 beschreibt einen Verstellantrieb für einen Fahrzeugsitz, bei dem eine derartige Spindel mit einer ein Verstellelement ausbildenden Fahrzeug-Sitzschiene drehfest verbunden ist. Die Spindel ist jedoch außerhalb der Schienenführung befestigt, was von Fahrzeugherstellern als unerwünscht angesehen wird. Eine andere Sitzverstelleinrichtung mit selbsthemmendem Verstellantrieb für Fahrzeugsitze ist aus DE 1 755 740 bekannt. Auch bei dieser Anordnung befindet sich eine Vielzahl von Komponenten neben einer Schienenführung.

Eine aufwändig konstruierte Getriebeanordnung zum Verstellen eines Fahrzeugsitzes ist außerdem aus WO 02/070299 A1 bekannt. Bei dieser Anordnung wird ein aufwändig konstruiertes Getriebe beschrieben, welches im Fall eines Unfalls auftretende Kräfte aufnehmen können soll.

Aus EP 1 068 093 B1 ist ein Getriebe, wie in Fig. 3 dargestellt, zum Verstellen zweier zueinander verstellbarer Teile 60, 61, insbesondere Fahrzeug-Teile einer Sitzverstelleinrichtung, eines Fensterhebers oder eines Schiebedachs bekannt, wobei das erste der Teile 60 eine mit einem Fahrzeugboden fest verbundene Unterschiene ausbildet, in welcher eine drehfeste Spindel 62 oder eine feste Zahnstange aufgenommen ist. Das Getriebe 6 sitzt auf der Spindel 62 und wird bei Betätigung längs der Spindel 62 hin und her verstellt. Das Getriebe 6 ist in einer Halterung 63 aufgenommen, welche zusammen mit dem zweiten der verstellbaren Teile 61 hin und her verstellt wird. Die Halterung 63 ist fest mit dem zweiten der zueinander verstellbaren Teile 61 verbunden, welches eine Oberschiene ausbildet, welche verstellbar mit der Unterschiene verbunden ist. Über eine Halteplatte 64 ist die Oberschiene mit weiteren Komponenten des Fahrzeugsitzes verbunden. Außerdem ist an der Halteplatte 64 über Befestigungselemente 65 ein Antrieb 66 befestigt, dessen Antriebswelle 67 mit einer antreibbaren Schnecke des Getriebes 6 verbunden ist.

Das Getriebe 6 besteht aus einem Schneckenrad, das eine dazu drehfeste Spindelmutter zum Antreiben der Spindel oder eine dazu drehfeste Schnecke zum Antreiben der Zahnstange aufweist, aus einer antreibbaren Schnecke zum Übertragen einer Antriebskraft des Antriebs auf das Schneckenrad und aus einem Getriebegehäuse, das die Schnecke und das Schneckenrad gelagert aufnimmt und das mit dem zweiten der verstellbaren Teile 61 in dessen Verstellrichtung verstellfest verbunden ist. Das Getriebegehäuse besteht dabei aus einer Vielzahl, insbesondere aus wenigstens zwei mittels Steckverbindungen aneinander befestigbaren Gehäuseplatten. Mittels der Steckverbindungen ist die Lage der Gehäuseplatten zueinander in allen Raumrichtung fixiert, wobei die Steckverbindungen gleichzeitig als tragende, die Getriebekräfte aufnehmende Verbindungsstellen ausgebildet sind. Im Falle nur zweier Gehäuseplatten besteht das Getriebegehäuse aus zwei L-förmigen Gehäuseplatten. Im Fall von zumindest vier Bauelementen besteht das Getriebegehäuse aus wenigstens zwei Paaren einander gegenüberliegender scheibenförmiger Gehäuseplatten, wobei es sich in jedem Fall um eine aufwändige Getriebeanordnung handelt, welche zusätzlich neben den eigentlichen Gehäuseteilen eine Vielzahl von weiteren Lagerelementen oder Lagerunterstützungselementen, wie Unterlegscheiben, erforderlich macht. Neben dem aufwändigen Zusammenbau einer Vielzahl von Einzelteilen ist auch nachteilhaft, dass die Toleranzen der einzelnen Einzelteile zueinander abgestimmt werden müssen. Die einzelnen Gehäuseteile eines solchen Getriebegehäuses werden miteinander verschweißt.

Weiterhin bekannt ist die Bereitstellung von zwei einzelnen Druckgehäuseteilen, welche mit einer Spindelmutter, Mitnehmerscheiben und Lagerbuchsen sowie einer Schnecke und zugehörigen Lagerbuchsen bestückt und anschließend durch plastisches Verformen von Steckverbindungen der Gehäusehälften verschlossen werden.

DE 36 40 197 A1 beschreibt eine Antriebsvorrichtung für einen verstellbaren Sitz mit einem zweiteiligen Gehäuse. In jeweils zwei gegenüberliegenden Wandungen des Gehäuses ist jeweils eine Lageröffnung zur Aufnahme der Welle einer Schnecke bzw. eines Schneckenrades ausgebildet. Um die aus einem Ende der Schnecke herausragende Welle lagern zu können, ist vor der Öffnung ein Deckel eingesetzt, dir innenseitig ein Lager zur Aufnahme der Welle ausgebildet hat. Es handelt sich hinsichtlich der Lagerung des Schneckenrades und der Schnecke um ein zweiteiliges Gehäuse, welches einem Hauptgehäuse und dem funktionell zwingend erforderlichen Deckel gebildet wird.

EP 0 992 711 A2 beschreibt ein Getriebegehäuse zur Aufnahme einer Schnecke und eines Schneckenrades, durch die jeweils eine Welle hindurchführt. Die beiden Wellen sind jeweils in zwei gegenüberliegenden Lagern gelagert, wobei die Lager durch entsprechende Durchgangsbohrungen durch die gegenüberliegenden Seitenwandungen ausgebildet sind. Zum Einsetzen von Schneckenrad und Schnecke in das Gehäuse ist dieses zweiteilig ausgebildet, wobei die jeweilige Teilungslinie durch die Seitenwandungen mittig durch die Durchgangsbohrungen verläuft. Nach dem Einlegen der Wellen von Schnecke und Schneckenrad in die Lagerabschnitte des unteren Gehäuseteils wird das obere Gehäuseteil darübergesetzt und verschraubt.

DE 41 01 470 C1 beschreibt eine Verstelleinheit für Fahrzeugsitze mit einem Gehäuse, in welchem eine Spindelmutter und eine Gewindespinde aufgenommen sind. Das Gehäuse ist ein zweiteiliges Gehäuse aus einem Hauptgehäuseteil und einem Deckel zum Verschließen des Hauptgehäuseteils. Zur Aufnahme einer Antriebwelle ist in einer Gehäusewandung eine Bohrung ausgebildet. Die Bohrung erstreckt sich in seitlicher Richtung schlitzförmig zu einer Außenwandung, welche durch den Deckel verschließbar ist. Die Breite des Schlitzes entspricht dabei mehr als der Breite der Antriebswelle und der Breite des Aufnahmeabschnitts für die Antriebswelle in deren Funktionsposition. Im Übrigen ist das Gehäuse sehr komplex und aus einer Vielzahl von einzelnen Wandungs- und Lagerelementen aufgebaut.

DE 37 25 158 C2 betrifft einen motorbetriebenen Sitz für ein Kraftfahrzeug, wobei ein mehrteiliges Gehäuse mit einer Schnecke und einem Schneckenrad dargestellt wird. Zur Lagerung von Schnecke und Schneckenrad wird eine Vielzahl verschiedenartiger Komponenten eingesetzt. DE 37 26 801 C2 betrifft ein Schneckengetriebe mit einem Gehäuse, wobei das Gehäuse durch eine die Antriebsachse enthaltende und zur Antriebsachse senkrechte Teilungsebene geteilt ist, so dass durch Auseinandernehmen der beiden Gehäuseteile eine Öffnung zum Einsetzen von Schneckenrad und Schnecke gebildet wird. DE 35 19 058 C2 beschreibt eine Sitzverstellung für einen Kraftfahrzeugsitz mit einem komplex aufgebauten Gehäuse zur Aufnahme einer Schnecke und eines Schneckenrades. Eine Welle ist in einer U-förmigen Aufnahme gelagert, welche durch ein flaches deckelförmiges Element verschlossen ist, um ein Herausrutschen der Welle aus der Aufnahme zur verhindern. DE 29 25 032 A1 betrifft eine Antriebseinheit für eine Sitzverstellung mit einem mehrteiligen Gehäuse zur Aufnahme einer Schnecke und eines Schneckenrades. Insbesondere dienen zur Lagerung von Wellen Lagerelemente, welche als eigene Komponenten in den Gehäuseteilen aufgenommen sind. DE 29 03 782 A1 betrifft eine Verstellgetriebeanordnung mit einem komplexen Aufbau zur Aufnahme einer Schnecke und eines Schneckenrades, wobei diese in speziellen Lagerelementen aufgenommen sind.

Die Aufgabe der Erfindung besteht darin, ein Getriebe zum Verstellen zweier zueinander verstellbarer Teile, insbesondere Fahrzeugteile einer Sitzverstelleinrichtung zu vereinfachen. Insbesondere soll die erforderliche Teileanzahl reduziert werden und ein einfacher Zusammenbau bzw. Austausch von Getriebeteilen ermöglicht werden.

Diese Aufgabe wird durch ein Getriebe zum Verstellen zweier zueinander verstellbarer Teile mit den Merkmalen des Patentanspruchs 1 gelöst. Gegenstand des Patentanspruchs 8 ist ein Spindel- oder Schneckenantrieb mit einem solchen Getriebe. Gegenstand des Patentanspruchs 9 ist ein Fahrzeugsitz mit einem solchen Getriebe. Vorteilhafte Ausgestaltungen sind Gegenstand abhängiger Ansprüche.

Vorteilhaft sind baugleiche Antriebe für eine linke und eine rechte Sitzschiene einzusetzen, wenn die eingesetzte Schnecke und/oder das eingesetzte Schneckenrad axial beidseitig zum Einführen oder zum Durchführen einer Antriebswelle ausgebildet ist. Vorzugsweise erfolgt die Anbindung der Antriebswelle an die Schnecke über einen Innenvierkant, der beidseitig oder hindurchführend in der Schnecke ausgebildet ist.

Bevorzugt wird demgemäss ein Getriebe zum Verstellen zweier zueinander verstellbarer Teile, insbesondere Fahrzeug-Teile einer Sitzverstelleinrichtung, eines Fensterhebers oder eines Schiebedachs, wobei das erste der Teile eine drehfeste Spindel oder eine feste Zahnstange aufweist und wobei das Getriebe ausgebildet ist mit einem Schneckenrad, das eine dazu drehfeste Spindelmutter zum Antreiben der Spindel oder eine dazu drehfeste Schnecke zum Antreiben der Zahnstange aufweist, mit einer antreibbaren Schnecke zum Übertragen einer Antriebskraft auf das Schneckenrad und mit einem Getriebegehäuse, das die Schnecke und das Schneckenrad gelagert aufnimmt und das mit dem zweiten der Teile in dessen Verstellrichtung verstellfest verbindbar ist, wobei das Getriebegehäuse aus einem einteiligen Körper ausgebildet ist mit einem Schneckenlager und einem Schneckenradlager.

Bevorzugt wird ein Getriebe, bei dem das Schneckenlager in einer oder zwei gegenüberliegenden Wandungen als insbesondere Seitenwandungen des Getriebegehäuses, insbesondere im oberseitigen Abschnitt des Getriebegehäuses, ausgebildet ist und in Einsetzrichtung der Schnecke eine Schneckenlager-Zugangsöffnung aufweist, wobei die Schneckenlager-Zugangsöffnung durch die entsprechende Seitenwandung bis zu der Unterseite der Seitenwandung und/oder des Getriebegehäuses hindurchführt.

Erfindungsgemäss wird ein solches Getriebe, bei dem die Schneckenlager-Zugangsöffnung oder ein Abschnitt im Übergangsbereich zwischen der Schneckenlager-Zugangsöffnung und dem Schneckenlager einen geringeren Abstand als ein Durchmesser eines Schneckenschafts der Schnecke aufweist.

Bevorzugt wird ein Getriebe, bei dem das Schneckenradlager in einer oder zwei gegenüberliegenden Wandungen, insbesondere unterhalb der oberseitigen Schnecke, ausgebildet ist und eine Schneckenradlager-Zugangsöffnuhg aufweist, wobei die Schneckenradlager-Zugangsöffnung durch eine entsprechende Seitenwandung bis zu der Unterseite der Seitenwandung und/oder des Getriebegehäuses hindurchführt.

Erfindungsgemäss wird ein solches Getriebe, bei dem die Schneckenradlager-Zugangsöffnung oder ein Abschnitt im Übergangsbereich zwischen der Schneckenradlager-Zugangsöffnung und dem Schneckenradlager einen geringeren Abstand als ein Durchmesser eines Schneckenradschafts des Schneckenrads aufweist.

Bevorzugt wird ein Getriebe, bei dem die Seitenwandungen mit dem Schneckenlager zwischen den Seitenwandungen mit dem Schneckenradlager ausgebildet sind. In einfacher Ausgestaltung werden durch die Seitenwandungen mit dem Schneckenradlager Stirnseiten eines Gehäuses und durch die Seitenwandungen mit dem Schneckenlager die beiden Wandungen zwischen den Stirnseiten ausgebildet. In Draufsicht bilden diese vier Wandungen somit. Seitenwandungen eines quadratischen oder quaderförmigen Gehäuses aus. Möglich sind aber auch Ausgestaltungen, bei denen zwei der gegenüberliegenden Wandungen zu den beiden anderen Wandungen unter einem Winkel zwischen einer Schneckenachse und einer Schneckenradachse verlaufen, wobei der Winkel theoretisch zwischen 1 und 179° liegen kann.

Bevorzugt wird ein Getriebe, bei dem die Seitenwandungen im unterseitigen Abschnitt des Getriebegehäuses aus zueinander beabstandeten Beinen ausgebildet sind, wobei die Abstände zweier benachbarter Beine als Schneckenlager-Zugangsöffnungen zum Durchführen eines Schneckehschafts und/oder als Schneckenradlager-Zugangsöffnungen zum Durchführen eines Schneckenradschafts breit genug und/oder elastisch genug dimensioniert sind.

Bevorzugt wird ein solches Getriebe mit einem Gehäuseverschlussteil zum unterseitigen Verschließen des Getriebegehäuses, wobei das Gehäuseverschlussteil die Beine nach dem Einsetzen des Gehäuseverschlussteils aneinander festlegt. Umsetzbar ist insbesondere ein solches Gehäuseverschlussteils in Form einer umfassenden Wanne oder in Form einer gestifteten Bauweise.

Bevorzugt wird ein Getriebe mit einem Gehäuseverschlussteil zum unterseitigen Verschließen des Getriebegehäuses, wobei das Gehäuseverschlussteil das Schneckenrad und/oder die Schnecke in dem Getriebegehäuse unterseitig lagert.

Bevorzugt wird ein Getriebe, bei dem zumindest eine innenseitige Seitenwandung zu der Schneckenlager-Zugangsöffnung hin und/oder zu der Schneckenradlager-Zugangsöffnung hin eine Einführungsabschrägung aufweist.

Aufbau und Montage eines derartigen Getriebes werden demgemäss vorteilhaft vereinfacht. Im einfachsten Fall erfolgt dies durch eine Reduzierung auf drei hervorzuhebende Bauteile, nämlich einen einstückigen Getriebeblock als Getriebegehäuse, eine Schnecke und eine Spindelmutter. Schnecke und Spindelmutter können dabei in für sich bekannter Ausführung verwendet werden, wobei die Spindelmutter insbesondere eine globoidische Verzahnung mit zylindrischem Anteil aufweist. Der Getriebeblock kann beispielsweise als Kunststoffspritzgießteil mit entsprechend angeformten Aufnahmen für Verzahnungsteile des Getriebes auf einfache Art und Weise und zugleich kostengünstig bereitgestellt werden. Die einzelnen Bauteile, d. h. insbesondere Schnecke und Spindelmutter, werden über die entsprechenden Aufnahmeeinrichtungen bzw. Zuführungseinrichtungen zu deren Lagern in den Getriebeblock eingesetzt und darin per Schnapp- bzw. Rastverbindung um deren jeweilige Längsachse drehbar gelagert. Gemäß einer bevorzugten Ausführungsform wird ein Getriebedeckel als Gehäuseyerschlussteil von unten in entsprechende Rastaufnahmen eingeschnappt, um die Kombination aus Schneckenrad und Spindelmutter im Getriebegehäuse zu sichern.

Bevorzugt wird der Einsatz eines derart sehr klein dimensionierbaren Getriebes zwischen zwei Sitzschienen als den relativ zueinander verstellbaren Teilen eines Fahrzeugsitzes. Prinzipiell ist jedoch die Anwendung in verschiedenen Anwendungen von Schneckengetrieben umsetzbar.

Ein Ausführungsbeispiel wird nachfolgend anhand der Zeichnung näher erläutert. Es zeigt:
- Fig. 1: ein Getriebegehäuse mit eingesetzter Schnecke und eingesetztem Schneckenrad gemäß einem besonders bevorzugten Ausführungsbeispiel;
- Fig. 1A: einen Schnitt durch eine solche Anordnung;
- Fig. 2: die Elemente der Anordnung aus Fig. 1 in auseinandergezogener Darstellung; und
- Fig. 3: schematisch einzelne Elemente eines Fahrzeugsitz-Gestells und einer Schienenführung mit einem Getriebe gemäß dem Stand der Technik.

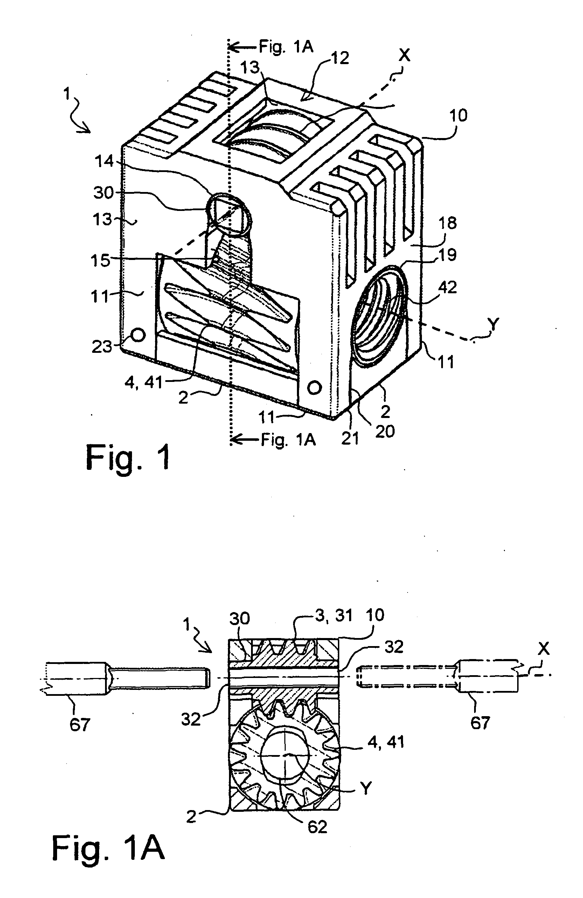

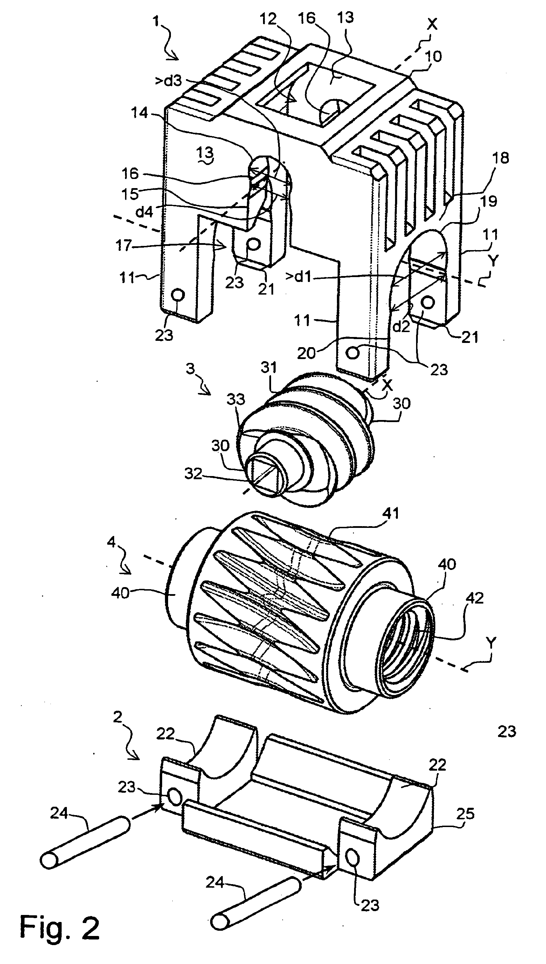

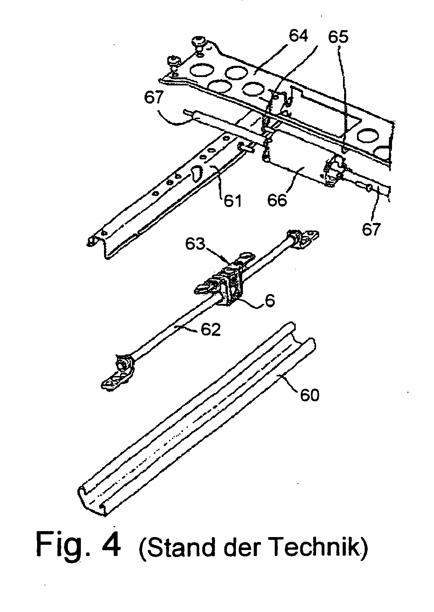

Fig. 1 und 2 zeigen in zusammengesetzter bzw. in auseinandergezogener Darstellung ein Getriebe und dessen Komponenten gemäß einer besonders bevorzugten Ausführungsform. Ein einstückiges Getriebegehäuse 1 dient zur Aufnahme sowohl einer Schnecke 3 als auch eines Schneckenrads 4. Optional ist die Anordnung von der Unterseite her durch ein Gehäuseverschlussteil 2 bzw. einen Gehäusedeckel verschließbar.

Das Getriebegehäuse 1 besteht aus einem Oberteil 10, an dessen unterseitigen Eckbereichen Beirre 11 bzw. stegförmige Ausleger nach unten hin gerichtet angeformt sind. Die Raumrichtungen oben und unten dienen vorliegend lediglich zur anschaulichen Beschreibung, da das zusammengesetzte Getriebe letztendlich in beliebigen Raumrichtungen in einer Antriebseinrichtung einsetzbar ist.

Zur Lagerung der Schnecke 3 bildet das Oberteil 10 des Getriebegehäuses 1 einen Aufnahme- bzw. Schneckenraum 12 aus. Die Schnecke 3 besteht in für sich bekannter Art und Weise aus einem Schneckenschaft 30 und einer Schnecken-Verzahnung 31, welche im zentralen mittleren Bereich des Schneckenschafts 30 um diesen herum ausgebildet ist. Wie dies insbesondere aus Fig. 1A erkennbar ist, weisen vorzugsweise beide Enden des Schneckenschafts 30 eine Antriebswellenaufnahme 32 auf, welche zur Befestigung einer Antriebswelle an dem Schneckenschaft 30 dient, so dass die Schnecke 3 in Rotation um ihre Längsachse X versetzbar ist. Eine beidseitige Anordnung oder eine hindurchführende Anordnung einer Antriebswellenaufnahme 32 ermöglicht baugleiche Antriebe für eine linke und eine rechte Sitzschiene bereitzustellen. Ein und derselbe Antrieb ist dadurch geeignet, eine Antriebswelle 67 axial beidseitig einzuführen oder hindurchzuführen. Vorzugsweise ist die Antriebswellenaufnahme 32 als ein Innenvierkant beidseitig oder hindurchführend in der Schnecke 3 ausgebildet.

Vor dem Einsetzen der Schnecke 3 in.den Schneckenraum 12 werden vorzugsweise ringförmige Lagerscheiben 33 auf die beiden Schneckenschaftenden 30 aufgesetzt, welche beidseitig der Schnecken-Verzahnung 31 aus der Schnecke 3 herausragen. Dies ist jedoch nicht zwingend erforderlich und kann im Fall beispielsweise einer globoidischen Verzahnung mit zylindrischem Anteil entfallen.

In zwei zueinander gegenüberliegenden ersten Seitenwandungen 13 des den Schneckenraum 12 ausbildenden Oberteils 1 des Getriebegehäuses 1 sind Schneckenlager 14 ausgebildet. Zumindest eines der Schneckenlager 14 ist dabei als Durchgangsöffnung durch die entsprechende erste Seitenwandung 13 ausgebildet, um den Durchtritt des entsprechenden Schneckenschafts 30 und/oder der Antriebswelle, welche an diesem befestigt ist, durch die erste Seitenwandung 13 zu ermöglichen. Der offene Durchmesser der Schneckenlager 14 ist dabei größer als ein Durchmesser d3 des Schneckenschafts 30. Vorzugsweise wird dabei jedoch so wenig wie möglich Spiel zugelassen.

Zum Einsetzen der Schnecke 3 in die Schneckenlager 14 ist in den beiden ersten Seitenwandungen 13 jeweils eine Schneckenlager-Zugangsöffnung 15 ausgebildet, welche sich von dem Schneckenlager 14 bis zur Unterseite des Oberteils 10 bzw. der entsprechenden ersten Seitenwandungen 13 erstreckt. Dies ermöglicht ein Einschieben der Schnecke 3 von der Unterseite her in das Schneckenlager 14, wobei die Enden des Schneckenschafts 30 durch die beiden entsprechenden Schneckenlager-Zugangsöffnungen 15 hindurchgeführt werden.

Zum Halten der Schnecke 3 in dem Schneckenraum 12 kann gemäß einfacher Ausführungsform von unten her das Schneckenrad 4 in das Getriebegehäuse 1 eingesetzt und in diesem so gelagert werden, dass die Schnecke 3 in dem Schneckenlager 14 sicher gelagert und durch das Schneckenrad nach unten abgestützt wird.

Gemäß der bevorzugten Ausführungsform weist jedoch die Wandung der Schneckenlager-Zugangsöffnung 15 einen quer, d. h. insbesondere parallel zur Schneckenachse X verlaufenden Steg als Haltesteg 16 auf. Ein offener Abstand d4 zwischen dem bzw. den Haltestegen 16 auf den beiden gegenüberliegenden Wandungen der Schneckenlager-Zugangsöffnung 15 ist dabei kleiner als der Durchmesser d3 des Schneckenschafts 30. Die Wandung des Getriebegehäuses 1 im Bereich zumindest der Schneckenlager-Zugangsöffnung 15 und/oder die Wandung des Schneckenschafts 30 bestehen aus einem elastischen Material, welches beim Einsetzen der Schnecke 3 durch die Schneckenlager-Zugangsöffnungen 15 in die Schneckenlager 14 nachgibt. Nach dem Einsetzen des Schneckenschafts 30 oberhalb des bzw. der Haltestege 16 ist der Schneckenschaft 30 mit seinen beiden Enden rotationsfähig in dem Schneckenlager 14 gelagert, wobei er nach unten hin durch die Haltestege 16 am Herausrutschen aus dem Schneckenlager 14 gehindert wird.

Das Schneckenrad 4 weist in für sich bekannter Art und Weise einen Schneckenradschaft 40 auf, der mit seinen beidseitigen Enden aus einer Schneckenrad-Verzahnung 41 herausragt. Das Schneckenrad 4 ist ausgebildet, um eine Schneckenradachse Y zu rotieren, wobei die Schneckenradachse Y zugleich die Rotationsachse einer Spindelmutter 42 ausbildet. Die Spindelmutter 42 wird durch eine innenseitige Verzahnung des als Hohlwelle ausgebildeten Schneckenradschafts 40 ausgebildet. Die Spindelmutter 42 dient zur Aufnahme einer Spindel, welche beim Einsatz des Getriebes in z. B. den Führungsschienen eines Fahrzeugsitzes mit einer entsprechend drehfest in einer der Schienen angeordneten Spindel in Eingriff gebracht wird. Bei einer Rotation des Schneckenrads 4 wird dadurch das Schneckenrad 4 längs der feststehenden Spindel hin und her bewegt. Zusammen mit dem Schneckenrad 4 wird das Getriebegehäuse 1, in welchem das Schneckenrad 4 aufgenommen ist, hin und her bewegt. Der Antrieb des Schneckenrads 4 erfolgt dabei über die oberseitig angeordnete Schnecke 3 und einer Antriebswelle, welche mit der Antriebswellenaufnahme 32 der Schnecke 3 in Verbindung steht.

Zum Einsetzen des Schneckenrads 4 weist das Getriebegehäuse 1 unterhalb des Oberteils 10 und unterhalb des Schneckenraums 12 einen Schneckenradraum 17 auf. Der Schneckenradraum 17 kann durch zwei oder mehr einander gegenüberliegende geschlossene Wandungen oder bevorzugt durch die vier Beine 11 umgrenzt sein. Jeweils zwei einander benachbarte der Beine 11 bilden somit eine zweite Seitenwandung 18 aus. In jeder dieser zueinander gegenüberliegenden beiden zweiten Seitenwandungen 18 ist ein Schneckenradlager 19 ausgebildet. Der Durchmesser dieser Schneckenradlager 19 ist dabei gleich oder größer einem Außendurchmesser d1 des Schneckenradschafts 40, so dass der Schneckenradschaft 40 in den beiden Schneckenradlagern 19 um die Schneckenradachse Y rotierbar gelagert wird.

Zum Einsetzen des Schneckenrads 4 in die Schneckenradlager 19 ist in den beiden zweiten Seitenwandungen 18 eine Schneckenradlager-Zugangsöffnung 20 ausgebildet. Die Schneckenradlager-Zugangsöffnungen 20 erstrecken sich dabei von den beiden Schneckenradlagern 19 bis zur Unterseite der beiden zweiten Seitenwandungen 18 bzw. zur Unterseite des Getriebegehäuses 1, so dass das Schneckenrad 4 von unten her mit dem Schneckenradschaft 40 durch die Schneckenradlager-Zugangsöffnungen 20 nach oben hin in die Schneckenradlager 19 einsetzbar ist.

Damit das Schneckenrad 4 bzw. der Schneckenradschaft 40 nach unten hin in den Schneckenradlagern 19 abgestützt wird, ist ein Abstand d2 der Wandungen der Schneckenradlager-Zugangsöffnungen 20 vorzugsweise geringfügig kleiner als der Außendurchmesser des Schneckenradschafts 40 ausgebildet. Das Material der Wandung der Schneckenradlager-Zugangsöffnungen 20 und/oder das Material des Schneckenradschaftes 40 ist dabei derart elastisch, dass der Schneckenradschaft 40 entgegen der elastischen Kraft von unten her durch die Schneckenradlager-Zugangsöffnungen 20 in die Schneckenradlager 19 eingeschoben werden kann und nach dem Erreichen der Schneckenradlager 19 durch die zurückgestellten Wandungen in den Schneckenradlagern 19 nach unten hin sicher gelagert'wird. Zur Erleichterung des Einschiebens des Schneckenradschafts 40 in die Schneckenradlager-Zugangsöffnungen 20 weisen diese eine nach unten hin und nach außen hin abgeschrägt verlaufende Wandung als Einführungsabschrägung 21 auf.

Zusätzlich oder alternativ kann ein Gehäusedeckel als ein Gehäuseverschlussteil 2 von unten her in das Getriebegehäuse 1 eingesetzt werden. Das Gehäuseverschlussteil 2 bildet dann einen Abschluss des ansonsten nach'unten offenen Schneckenradraums 17. Die oberseitige Wandung des Gehäuseverschlussteils 2 ist vorzugsweise derart gerundet ausgebildet, dass der Schneckenradraum 17 einen ausreichenden Raum für die Schneckenrad-Verzahnung 41 bildet und dass die beiden Enden des Schneckenradschafts 40 auf entsprechend geformten Lagerflächen 22 lagern. Zum Fixieren des Gehäuseverschlussteils 2 in dem Getriebegehäuse 1 kann ein für sich bekannter Rastverschluss mit beispielsweise entsprechenden Rastelementen an den Beinen 11 des Getriebegehäuses 1 ausgebildet werden. Besonders bevorzugt werden jedoch Bolzenaufnahmen 23 zur Aufnahme von Befestigungsbolzen 24, wobei die Bolzenaufnahmen 23 als Durchgangsöffnungen durch sowohl die Beine 11 als auch eine seitliche Wandung 25 des Gehäuseverschlussteils 2 hindurchführen. Die Breite der seitlichen Wandungen 25 entspricht dabei vorzugsweise dem Abstand d2 der Wandungen der Schneckenradlager-Zugangsöffnungen 20, so dass der Schneckenradraum 17 zu den zweiten Seitenwandungen 18 hin nach Einsetzen des Schneckenrads 4 dicht abgeschlossen wird. Die Schneckenradachse Y verläuft insbesondere in einer Richtung senkrecht zur Schneckenachse X, wie dies für sich bekannt ist.

Gemäß einer alternativen Ausführungsform kann anstelle eines Schneckenrads 4 mit einer integrierten Spindelmutter 42 auch ein Schneckenrad 4 mit einem Schneckenradschaft 40 eingesetzt werden, wobei auf dem Schneckenradschaft 40 neben der Schneckenrad-Verzahnung 41 eine Schnecken-Verzahnung ausgebildet ist. Die Schnecken-Verzahnung dient dann zum Eingreifen in die Verzahnung einer Zahnstange, welche ortsfest in beispielsweise einer am Fahrzeugboden befestigten Schiene angeordnet ist, um das Getriebegehäuse 1 längs der Zahnstange hin und her zu bewegen. In diesem Fall ist der Boden des Getriebegehäuses 1 nach unten hin geöffnet, um den Eingriff der Zahnstange zu ermöglichen, wobei eine solche Zahnstange durch die Schneckenradlager-Zugangsöffnungen 20 führen kann. Insbesondere kann eine solche Zahnstange auch als Widerlager für das Schneckenrad 4 dienen, so dass die Verengung des Abstands der Beine 11 bzw. der Wandungen der Schneckenradlager-Zugangsöffnungen 20 dann nicht geringer als die Größe des Durchmessers d1 des Schneckenradschafts 40 zu sein braucht.

Umsetzbar ist eine Vielzahl weiterer Ausformungen des Getriebegehäuses 1. Beispielsweise kann das Getriebegehäuse 1 aus einem im Wesentlichen quaderförmigen Gehäuse mit einer offenen Bodenwandung und von der Bodenwandung aus vier durch die Seitenwandungen führenden Schneckenlager- bzw. Schneckenradlager-zugangsöffnungen 15, 20 ausgebildet sein, welche nach oben hin bis zu dem jeweiligen Schneckenlager 14 bzw. Schneckenradlager 19 führen.

Anstelle der Verwendung von elastischen Wanciungsznaterialien können auch elastische Übergangsbereiche ausgebildet werden, insbesondere auf Höhe der Schneckeriradlager 19 bzw. der Schneckenlager 14, um die nach unten hin führenden seitlichen Wandungen der Schneckenradlager-Zugangsöffnungen 20 bzw. der Schneckenlager-Zugangsöffnungen 15 zum Hindurchschieben des Schneckenradschafts 40 bzw. des Schneckenschafts 30 temporär auseinander zu spreizen.

Als Material für das Getriebegehäuse 1, die Schnecke 3 und das Schneckenrad 4 wird Kunststoff besonders bevorzugt, da eine einfache Fertigung mittels Spritzgussverfahren ermöglicht wird. Prinzipiell möglich ist aber auch die Verwendung anderer Materialien, insbesondere Metall zur Fertigung derartiger Getriebe.

Ein derart ausgebildetes Getriebe aus einem solchen Getriebegehäuse 1 mit einer Schnecke 3 und einem Schneckenrad 4 wird beispielsweise in einer Anordnung gemäß Fig. 3 anstelle des dort abgebildeten Getriebes 6 eingesetzt. Dabei wird die Spindel 62 durch die Spindelmutter 42 geführt. Die Antriebswelle 67 des Antriebs 66 wird mit der Antriebswellen-Aufnahme 32 des Schneckenschafts 30 der Schnecke 3 verbunden. Das Antreiben der Antriebswelle 67 mittels des Antriebs 66 führt dadurch zu einer Rotation der Schnecke 3, welche das Schneckenrad 4 in eine entsprechende Rotation versetzt. Durch die miterfolgende Rotation der Spindelmutter 42 wird das Schneckenrad 4 und über dessen Lagerung in den Schneckenradlagern 19 das Getriebegehäuse 1 längs der feststehenden Spindel 62 hin und her bewegt. Zusammen mit dem Getriebegehäuse 1 wird über die Halterung 63 die Oberschiene 61, welche eines der verstellbaren Teile ausbildet, gegenüber der Unterschiene 60, welche das andere der verstellbaren Teile ausbildet, verstellt, so dass ein an der Oberschiene 61 befestigter Sitz relativ zu einem Fahrzeugboden vor- oder zurückverstellt wird.

Gemäß einer alternativen Ausführungsform kann auch das Schneckenrad 4 als oberes Zahnelement in dem Getriebegehäuse 1 oberhalb der Schnecke 3 angeordnete werden.

Insbesondere bei einer Anordnung des Schneckenrads 4 als unteres Zahnelement in dem Getriebegehäuse 1 mit hindurchgeführter Spindel 62 kann auch eine nach unten abschließende Lagerung für den Schneckenradschaft 40 entfallen, wenn die Spindel 62 das Schneckenrad 4 und über das Schneckenrad 4 ggf. auch die Schnecke 3 relativ zu dem Getriebegehäuse 1 nach unten hin in den entsprechenden Lagern 14, 19 hält.

### Bezugszeichenliste:

- 1: Getriebegehäuse
- 10: Oberteil von 1
- 11: Beine/stegförmige Ausleger von 1
- 12: Schneckenraum
- 13: erste Seitenwandungen von 1
- 14: Schneckenlager
- 15: Schneckenlager-Zugangsöffnungen
- 16: Haltesteg in 15
- 17: Schneckenradraum
- 18: zweite Seitenwandungen von 1
- 19: Schneckenradlager
- 20: Schneckenradlager-Zugangsöffnung
- 21: Einführungsabschrägung von 20
- 2: Gehäuseverschlussteil/Deckel
- 22: Lager in 2 für 40
- 23: Bolzenaufnahmen
- 24: Befestigungsbolzen
- 3: Schnecke
- 30: Schneckenschaft
- 31: Schnecken-Verzahnung
- 32: Antriebswellenaufnahme in 30
- X: Schneckenachse
- 4: Schneckenrad
- 40: Schneckenradschaft
- 41: Schneckenrad-Verzahnung
- 42: Spindelmutter
- Y: Schneckenradachse
- d1: Durchmesser von 40
- d2: Abstand gegenüberliegender wandungen der Schneckenradlager-Zugangsöffnungen 20
- d3: Durchmesser von 30
- d4: Abstand gegenüberliegender Wandungen der Schneckenlager-Zugangsöffnungeh 15

## Patentansprüche

1. Getriebe zum Verstellen zweier zueinander verstellbarer Teile (60, 61), insbesondere Fahrzeug-Teile einer Sitzverstelleinrichtung, eines Fensterhebers oder eines Schiebedachs, wobei das erste der Teile (60) eine drehfeste Spindel (62) und wobei das Getriebe ausgebildet ist mit
- einem Schneckenrad (4, 41), das eine dazu drehfeste Spindelmutter (42) zum Antreiben der Spindel (62) aufweist,
- einer antreibbaren Schnecke (3, 31) zum Übertragen einer Antriebskraft auf das Schneckenrad (4, 41) und
- einem Getriebegehäuse (1), das die Schnecke (3) und das Schneckenrad (4) gelagert aufnimmt und das mit dem zweiten der Teile (61) in dessen Verstellrichtung verstellfest verbindbar ist, wobei
- das Getriebegehäuse (1) ausgebildet ist mit einem Schneckenlager (14) und einem Schneckenradlager (19),
- das Schneckenlager (14) in zwei gegenüberliegenden Wandungen (13) des Getriebegehäuses (1) ausgebildet ist und in Einsetzrichtung der Schnecke (3) eine Schneckenlager-Zugangsöffnung (15) aufweist und
- das Schneckenradlager (19) in zwei gegenüberliegenden Wandungen (18) des Getriebegehäuses (1) ausgebildet ist und eine Schneckenradlager-Zugangsöffnung (20) aufweist,
- das Getriebegehäuse (1) aus einem einteiligen Körper ausgebildet ist mit dem Schneckenlager (14) und dem Schneckenradlager (19),
- an der Schnecke (3) in ihrer axialen Richtung beidseitig oder hindurchführend eine Antriebswellenaufnahme (32) ausgebildet ist zum Einführen oder zum Durchführen einer Antriebswelle (67),
- die Schneckenlager-Zugangsöffnung (15) einen geringeren Abstand (d4) als ein Durchmesser (d3) eines Schneckenschafts (30) der Schnecke (3) aufweist und/oder
- die Schneckenradlager-Zugangsöffnung (20) einen geringeren Abstand (d2) als ein Durchmesser (d1) eines Schneckenradschafts (40) des Schneckenrads (4) aufweist.

2. Getriebe nach Anspruch 1, bei dem das Schneckenlager (14) in den zwei gegenüberliegenden Wandungen (13) des Getriebegehäuses (1) im oberseitigen Abschnitt des Getriebegehäuses (1) ausgebildet ist, wobei die Schneckenlager-Zugangsöffnung (15) durch die entsprechende Seitenwandung (13) bis zu der Unterseite der Seitenwandung (13) des Getriebegehäuses (1) hindurchführt.

3. Getriebe nach einem vorstehenden Anspruch, bei dem das Schneckenradlager (19) in zwei gegenüberliegenden Wandungen (18) unterhalb der oberseitigen Schnecke (3) ausgebildet ist, wobei die Schneckenradlager-Zugangsöffnung (20) durch eine entsprechende Seitenwandung (13) bis zu der Unterseite der Seitenwandung (13) des Getriebegehäuses (1) hindurchführt.

4. Getriebe nach einem vorstehenden Anspruch, bei dem die Seitenwandungen (13) mit dem Schneckenlager (14) zwischen den Seitenwandungen (18) mit dem Schneckenradlager (19) ausgebildet sind.

5. Getriebe nach einem der Ansprüche 1 bis 4 mit einem Gehäuseverschlussteil (2) zum unterseitigen Verschließen des Getriebegehäuses (1).

6. Getriebe nach einem vorstehenden Anspruch, bei dem zumindest eine innenseitige Seitenwandung (13, 18) zu der Schneckenlager-Zugangsöffnung (15) hin eine Einführungsabschrägung (21) aufweist.

7. Getriebe nach einem vorstehenden Anspruch, bei dem die zumindest eine Antriebswellenaufnahme (32) mit dem Profil eines Innenvierkants in der Schnecke (3) ausgebildet ist.

8. Spindel- oder Schneckenantrieb mit einem Getriebe (1, 2, 3) nach einem vorstehenden Anspruch.

9. Fahrzeugsitz mit einem Getriebe (1, 2, 3) nach einem vorstehenden Anspruch.

## Claims

1. A gear mechanism for the displacement of two parts (60, 61) capable of being displaced with respect to each other, in particular vehicle parts of a seat displacement device, a window winder or a sliding roof, wherein the first of the parts (60) [is] a rotationally fixed spindle (62) and wherein the gear mechanism is formed with
- a worm gear (4, 41) which has a spindle nut (42) rotationally fixed thereto for driving the spindle (62),
- a worm (3, 31) capable of being driven for transmitting a driving force to the worm gear (4, 41) and
- a gear mechanism housing (1) which receives the worm (3) and the worm gear (4) in a mounted manner and which is capable of being connected in a non-displaceable manner to the second of the parts (61) in the displacement direction thereof, wherein
- the gear mechanism housing (1) is designed with a worm bearing (14) and a worm gear bearing (19),
- the worm bearing (14) is formed in two opposite walls (13) of the gear mechanism housing (1) and has a worm bearing access opening (15) in the insertion direction of the worm (3), and
- the worm gear bearing (19) is formed in two opposite walls (18) of the gear mechanism housing (1) and has a worm gear bearing access opening (20),
- the gear mechanism housing (1) is formed from a one-piece body with the worm bearing (14) and the worm gear bearing (19),
- a drive shaft receiving means (32) is formed on the worm (3) on both sides or continuously in the axial direction thereof for the insertion or the passage of a drive shaft (67),
- the worm bearing access opening (15) has a shorter distance (d4) than a diameter (d3) of a shaft (30) of the worm (3) and/or
- the worm gear bearing access opening (20) has a shorter distance (d2) than a diameter (d1) of a shaft (40) of the worm gear (4).

2. A gear mechanism according to claim 1, in which the worm bearing (14) is formed in the portion on the top side of the gear mechanism housing (1) in two opposite walls (13) of the gear mechanism housing (1), wherein the worm bearing access opening (15) passes through the corresponding lateral wall (13) as far as the underside of the lateral wall (13) of the gear mechanism housing (1).

3. A gear mechanism according to a preceding claim, in which the worm gear bearing (19) is formed below the worm (3) on the top side in two opposite walls (18), wherein the worm gear bearing access opening (20) passes through a corresponding lateral wall (13) as far as the underside of the lateral wall (13) of the gear mechanism housing (1).

4. A gear mechanism according to a preceding claim, in which the lateral walls (13) with the worm bearing (14) are formed between the lateral walls (18) with the worm gear bearing (19).

5. A gear mechanism according to any one of claims 1 to 4, with a housing closure part (2) for closing the gear mechanism housing (1) at the bottom.

6. A gear mechanism according to a preceding claim, in which at least one lateral wall (13, 18) on the inside has an insertion slope (21) towards the worm bearing access opening (15).

7. A gear mechanism according to a preceding claim, in which the at least one drive shaft receiving means (32) is formed with the profile of an internal square in the worm (3).

8. A spindle or worm drive with a gear mechanism (1, 2, 3) according to a preceding claim.

9. A vehicle seat with a gear mechanism (1, 2, 3) according to a preceding claim.

## Revendications

1. Dispositif de transmission pour déplacer deux pièces (60, 61) réglables entre elles, en particulier des pièces de véhicule automobile d'une installation de réglage de siège, un lève glace ou un toit coulissant, la première des pièces (60) étant une broche fixe en rotation (62) et la transmission comprenant :
- une roue à vis (4, 41) ayant un écrou d'arbre (42) solidaire en rotation pour entrainer la broche (62),
- une vis sans fin entrainée (3, 31) pour transmettre une force d'entrainement à la roue à vis (4, 41), et
- un boitier de transmission (1) qui loge au moyen de paliers, la vis sans fin (3) et la roue à vis (4) et qui peut être relié avec la seconde (61) pièce, fixe en déplacement dans sa direction de réglage, dans lequel
* le boitier de transmission (1) a un palier de vis sans fin (14) et un palier de roue à vis (19),
* le palier de vis sans fin (14) est réalisé dans deux parois opposées (13) du boitier de transmission (1) et présente une ouverture d'accès (15) au palier de vis sans fin dans la direction d'installation de la vis sans fin (3), et
* le palier de roue à vis (19) est réalisé dans deux parois opposées (18) du boitier d'entrainement (1) et présente une ouverture d'accès (20) du palier de roue à vis,
* le boitier de transmission (1) est réalisé d'une seule pièce avec le palier de vis sans fin (14) et le palier de roue à vis sans fin (19),
- un logement d'arbre d'entrainement (32) à la vis sans fin (3) comporte de part et d'autre dans sa direction axiale ou de façon traversante pour recevoir ou être traversé par un arbre d'entrainement (67),
- l'ouverture d'accès (15) au palier de vis sans a un écartement (d4) inférieur au diamètre (d3) du corps (30) de la vis sans fin (3), et/ou
- l'ouverture d'accès (20) au palier de roue à vis a un écartement (d2) inférieur au diamètre (d1) du corps (40) de la roue à vis (4).

2. Dispositif de transmission selon la revendication 1, dans lequel
- le palier de vis sans fin (14) est réalisé dans deux parois opposées (13) du boitier de transmission (1) dans le segment supérieure du boitier (1),
- l'ouverture d'accès (15) au palier de vis sans fin passe de la paroi latérale correspondante (13) jusqu'au côté inférieur de la paroi latérale (13) du boitier (1).

3. Dispositif de transmission selon l'une des revendications précédentes,
dans lequel
- le palier de roue à vis (19) est réalisé dans deux parois opposées (18) en dessous de la vis sans fin (3) placé au-dessus,
- l'ouverture d'accès (20) au palier de roue à vis traversant la paroi latérale correspondante (13) jusqu'au côté inférieur de la paroi latérale (13) du boitier (1).

4. Dispositif de transmission selon l'une des revendications précédentes,
dans lequel
les parois latérales (13) avec le palier de vis sans fin (14) sont réalisées entre les parois latérales (18) avec les paliers de roue à vis (19).

5. Dispositif de transmission selon l'une des revendications 1 à 4, comprenant un couvercle de boitier (2) pour fermer le dessous du boitier (1).

6. Dispositif de transmission selon l'une des revendications précédentes,
dans lequel
au moins une des parois latérales intérieures (13, 18) présente une rampe d'introduction (21) vers l'ouverture d'accès (15) au palier de vis sans fin.

7. Dispositif de transmission selon l'une des revendications précédentes,
dans lequel
l'unique logement d'arbre d'entrainement (32) est réalisé avec une emprunte à section carrée dans la vis sans fin (3).

8. Entrainement à broche ou à vis sans fin comportant une transmission (1, 2, 3) selon l'une des revendications précédentes.

9. Siège de véhicule automobile équipé d'une transmission (1, 2, 3) selon l'une des revendications précédentes.
